# EUROPEAN PATENT APPLICATION

(11) **EP 4 796 420 A1**
(43) Date of publication of application: **26.08.2026**
(21) Application number: 26158705.9
(22) Date of filing: 16.02.2026
(51) Int. Cl.: B62J 1/02, B62K 21/14, B62K 21/20

(54) **VIBRATION DAMPING SYSTEM FOR BICYCLE HANDLEBARS AND SEATPOSTS**

(30) Priority: 19.02.2025 IT 202500003261
(71) Applicant: Morelli, Angelo, 29010 Pontenure (Piacenza) (IT)
(72) Inventor: Morelli, Angelo, 29010 Pontenure (Piacenza) (IT)
(74) Representative: Ripamonti, Enrico

(57) **Abstract**

A vibration damping system for bicycles and, more particularly, for handlebars and seatposts of bicycles of the competition type (racing bicycles), triathlon, gravel, mountain bikes, electric bicycles, city bicycles and the like, comprising a plurality of damping pads stabilized internally and/or externally to a handlebar and/or a seatpost of a bicycle at areas of a handlebar (12, 30) and/or a seatpost assembly (50) in which vibrations transmitted from the terrain to the wheels, the frame and the cyclist are concentrated.

## Description

The present invention relates to a vibration damping system for bicycles.

More particularly, the present invention relates to a vibration damping system for handlebars and seatposts of bicycles of the competition type (racing bicycles), triathlon, gravel, mountain bikes, electric bicycles, city bicycles and the like.

As is known, the problem of vibrations in bicycles, with particular reference to the handlebar and seatpost, is of fundamental importance both for the cyclist's comfort and for their safety and overall performance (for example, in the case of a cycling competition); handlebar and seatpost (and, therefore, the saddle), represent the main points of contact between the cyclist and the bicycle itself and their ability to manage and attenuate vibrations greatly affects the riding experience.

Vibrations in a bicycle mainly originate from uneven terrain (potholes, rough surfaces, cobblestones, and gravel paths generate impulses of varying intensity), from the characteristics of the bike itself (such as the design and materials used in the frame and various components, overall structural stiffness, etc.), and from riding speed (higher speeds amplify the intensity of absorbed and transmitted vibrations, and consequently, those perceived by the cyclist).

The inconveniences caused by the vibrations transmitted by the bicycle to the cyclist can be physical, technical and psychomotor.

Physical inconveniences manifest themselves as early-onset fatigue caused by increased muscular and joint strain (prolonged vibrations, in fact, force the muscles to work harder to stabilize the body and accentuate the load on the joints and, in particular, on the hands, wrists, elbows, shoulders, knees and lumbar area), a loss of sensitivity (carpal tunnel syndrome or numbness, for example, can be caused by excessive pressure combined with vibrations of the handlebar), joint pain (unattenuated vibrations can cause chronic discomfort to the cyclist, especially during long training and running sessions).

Technical inconveniences, caused by the vibrations to which a bicycle is subjected during use, affect the degradation of materials through different mechanisms, which depend both on the frequency and amplitude of the stresses and on the properties of the materials.

Particularly vulnerable to cyclical stresses are components subject to alternating flexion and torsion, such as wheel rims, handlebar, seatpost and frame, where the cyclic alternation of bending, tensile and compressive stresses promotes the nucleation and growth of specific structural discontinuities, generating micro-cracks at critical stress concentration points and triggering dangerous mechanical fatigue processes that may evolve into slow-propagating fractures or, in more severe cases, into full breakage.

These stresses can lead to numerous inconveniences related to abnormal and early structural degradation of the vehicle (vibrations can accelerate the deterioration of components such as the handlebar, seatpost and wheels) and/or component malfunctions (vibrations can affect the operation of the brakes and transmissions, especially in conditions of greater stress); in fact, frames made of carbon fibre or other special light alloys do not withstand a continuous flow of cyclic vibrations and, in the long run, the fibres of which these sophisticated materials are composed tend to "crumble" in areas subject to concentrated load, giving way to delamination phenomena (detachment between the layers) and internal fractures, progressively weakening until they collapse with sudden and catastrophic failures, in the most extreme cases.

Accelerated wear necessarily leads to more frequent replacement of bicycle components before dangerous inconveniences to the cyclist may occur due to breakage and the like (e.g., deformation and failure of wheel rims, handlebars for frames, and the like).

From a psychomotor standpoint, prolonged stress and discomfort caused by continuous vibrations experienced by the cyclist may affect the sensitivity of the hands and feet, causing characteristic phenomena such as "tingling" and a reduction in the capacity of sensory response with a significant reduction in the level of concentration and, consequently, a dangerous fogging of the reflexes that can compromise the full capacity of control and riding of the bicycle (an excessive load of vibrations affects the cyclist's ability to keep the bike on a precise trajectory, significantly increasing the risk of technical errors, collisions, and accidents-especially when riding in a group at high speed on flat terrain, downhill, or on particularly uneven, damaged, or rough road surfaces).

The continuous corrective movements to which the cyclist is forced to compensate for the effects of vibrations and jolts not only compromise the fluidity of the pedal stroke, but also lead to a dispersion of energy and an increase in muscle fatigue; this inefficient transfer of power results in a reduction in overall performance, negatively affecting both the effectiveness of the thrust on the pedals and the stability and control of the vehicle.

Vibrations are also particularly significant for the handlebar and seatpost of a bicycle.

With reference to the handlebar, it represents the point where the cyclist controls the direction and transmits a significant part of the body weight and, therefore, it clearly appears how the vibrations that are transmitted through the fork and the frame have a direct impact on said element and how the transmission of excessive vibrations can cause difficulties in driving accuracy, steering and, more generally, compromise the safe management of the bicycle.

With regard to the seatpost, it represents an additional element directly responsible for transmitting vibrations to the cyclist-particularly affecting the lumbar area and pelvis. This is due to the stiffness of the wheels and frames, which can amplify and channel vibration flows toward the seatpost, subjecting the cyclist's body to intense stresses. These stresses are not mitigated by saddles, which have become increasingly extreme in terms of compactness, lightness, and rigidity, and which are often covered with thin padding that is entirely inadequate for even minimal vibration damping.

Continuous stresses can also cause the loosening of the saddle's retaining mechanisms, leading to micro-movements that may alter its position, thereby compromising pedalling efficiency and the cyclist's stability in the saddle.

In order to overcome the inconveniences described, the bicycles can be equipped with springs inserted in the steering column/handlebar and/or springs (and/or shock absorbers) applied to the rear forks and/or seatpost and saddles.

However, such a solution presents significant drawbacks in terms of bulk and considerable weight, making the use of such springs unsuitable for racing bicycles, where weight is a critical factor for optimal performance.

In addition, this solution is characterized by a construction complexity, a significant cost and considerable management and maintenance difficulties that are not acceptable in the road racing bicycle sector.

The problem of vibrations is particularly difficult to manage when it comes to racing bicycles, where weight is a crucial factor, since a lighter bike requires less effort and, therefore, with the same amount of effort from the cyclist, allows for higher speed; for this type of bicycle, materials such as carbon fibre or lightweight alloys are typically used, as they ensure low weight, compact dimensions, and high stiffness (commonly referred to in cycling jargon as "responsiveness"), meaning resistance to bending loads experienced by the bike during motion, which would otherwise dissipate part of the energy generated by pedalling.

The current competition bikes are therefore very light and "reactive", the wheels in particular are extremely rigid, for example, high profile rims with inflated covers with a high number of bars are widely used on the road, which are particularly effective on roads with uniform surfaces.

In fact, roads that are not newly built or properly maintained often have uneven surfaces, damaged by wear and tear as well as various types of irregularities and discontinuities; along these high-speed roads the intense vibrations generated by the rolling of the wheels and random impacts are inevitably absorbed by the bicycle's structure and transferred-often amplified-to the cyclist while pedalling.

Gravel and mountain bikes are by definition subject to significantly greater stresses than road bikes; in fact, as they are designed to handle uneven routes with long stretches of dirt and rough surfaces, these bicycles, compared to road models, feature frames that are less lightweight and sophisticated, yet equally stiff and "responsive."

In addition, these types of bicycles are equipped with wheels featuring much sturdier and heavier rims, fitted with oversized tires whose width significantly exceeds the inner rim width in order to increase the tire's contact patch with the terrain. These tires are inflated to a lower pressure (bar), but this does not help reduce vibrations. In fact, such tires typically have very pronounced tread patterns, with aggressive lugs designed to provide the most effective and secure grip on the terrain, improving stability and preventing slippage. However, this same feature tends to further amplify the already significant vibration flows generated by contact with surface irregularities, as well as by the constant jolting caused by the numerous bumps and rough patches commonly found on these types of roads.

Likewise, the continuous and intense vibrations resulting from riding on rough terrain contribute, especially over long distances, to significant discomfort, making pedalling on such routes inconsistent, painful, and ultimately less effective.

The described vibrations are massively transmitted to the bicycle and, if they do not encounter any absorption and/or damping points along the route, they travel freely through the material fibres in rapid successive waves, generating an almost continuous "stream" of vibrations rising from the wheels along the frame. This stream is amplified by the lever arms formed by the wheels themselves and the tubular elements of the frame, seatpost, and handlebar. It expands and concentrates to the point of setting the material fibres into resonance, which, by sustaining maximum vibration levels over time, exponentially increases the degree of harmfulness.

This "mass" of vibrations is poured on the cyclist with particularly harmful consequences on his body both during the use of the bicycle for training and competitions and subsequently with numerous and unpredictable long-term side effects.

In fact, cycling - especially at a competitive level - is a sport that typically does not involve short durations or limited routes but rather long training sessions and races that require the cyclist to remain in the saddle for extended periods, in all weather and terrain conditions and with the need to maintain an aerodynamic riding position (in order to minimize air resistance) while aiming for maximum pedalling efficiency and, as a result, optimal performance.

In order to reduce "aerodynamic drag" and achieve optimal aerodynamics, the cyclist must adopt a crouched position on the bike, particularly over the handlebar and this demanding, uncomfortable, and unnatural posture, maintained for extended periods, combined with exposure to vibrations transmitted from the ground through the wheels, impacts, and other mechanical stresses, can have significant effects on the cyclist, resulting in discomfort whose intensity is directly proportional to the duration of the effort, the strength of the vibrations, the length of exposure, and the individual's ability to absorb vibrations over time (a function of the cyclist's physical condition and age).

Vibrations transmitted to the cyclist may involve risks of disabling damage of a muscular and osteoarticular nature (for example, pains, contractures, inflammations and the like), injuries to the dorsal and lumbosacral tracts, neck and cervical spine and the like.

The object of the present invention is to obviate the aforementioned drawbacks.

More particularly, the object of the present invention is to provide a vibration damping system for bicycles, designed to reduce, contain, or even eliminate the intensity of the vibrations transmitted from the bicycle to the cyclist, as well as to the bicycle itself.

A further object of the present invention is to provide a vibration damping system adapted to guarantee a high level of comfort for the cyclist as well as an increase in the service life of the bicycle and its components.

A further object of the present invention is to provide a vibration damping system that is lightweight and compact, so as not to compromise, in particular, the weight requirements of road racing bicycles, triathlon bikes, and gravel bikes.

A further object of the present invention is to provide a vibration damping system that is robust and durable.

A further object of the present invention is to provide a vibration damping system that is easy to install even by non-specialized users.

A further object of the present invention is to provide users with a vibration damping system for bicycles that offers high reliability and long-lasting performance, and that can also be manufactured easily and cost-effectively. These and other objects are achieved by the invention having the characteristics referred to in claim 1.

According to the invention there is provided a vibration damping system for bicycles and, more particularly, for handlebars and seatposts of bicycles of the competition type (racing bicycles), triathlons, gravel, mountain bikes, electric bicycles, city bicycles and the like, comprising a plurality of damping pads stabilized internally and/or externally on a handlebar and/or a seatpost of a bicycle, positioned in areas of the handlebar and/or seatpost where vibrations transmitted from the terrain to the wheels, the frame, and the cyclist are concentrated.

Advantageous embodiments of the invention arise from the dependent claims.

The structural and functional characteristics of the vibration damping system for bicycles according to the present invention will be better understood from the detailed description that follows, with reference to the attached drawing sheets, which illustrate exemplary and by no means limiting embodiments, wherein:
Figure 1 schematically illustrates the vibration damping system for bicycles of the present invention applied to a handlebar according to a first embodiment;
Figure 1A schematically illustrates the vibration damping system for bicycles of the present invention applied to a handlebar according to a first embodiment and in exploded view;
Figure 2 schematically illustrates the vibration damping system for bicycles of the present invention applied to a handlebar according to a second embodiment;
Figure 2A schematically illustrates the vibration damping system for bicycles of the present invention applied to a handlebar according to a second embodiment and in exploded view;
Figure 3 schematically illustrates the vibration damping system for bicycles of the present invention applied to a seatpost.

The vibration damping system of the invention comprises a plurality of damping pads made of natural rubber, cork, polyurethane elastomers (PU), silicone, thermoplastic elastomers (PTE), microcellular elastomers and similar polymeric materials, with thicknesses, preferably but not exclusively, between 0.5mm and 8mm and even more preferably between 1mm and 5mm.

Said damping pads are applied, as better detailed below, to the handlebar and/or the seatpost of a bicycle in areas with a rigid structure that tend not to absorb energy and in which, therefore, there is a greater propagation of the vibrations transmitted from the terrain to the wheels, to the frame and from here to the seatpost and the handlebar and then to the cyclist.

The shape and degree of hardness of said pads are a function of the position of application thereof and the desired ergonomics (for example, in the case of application to a handlebar) and, preferably but not exclusively, the value of the hardness can be between 30 and 100 Shore A.

Said damping pads can be applied in the positions of interest (as better detailed below) by means of adhesive or glue or with another suitable non-permanent and removable fixing method of the plasticized tapes type and the like.

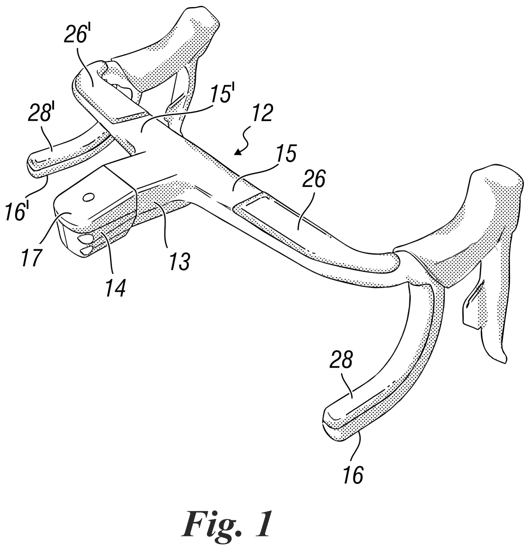

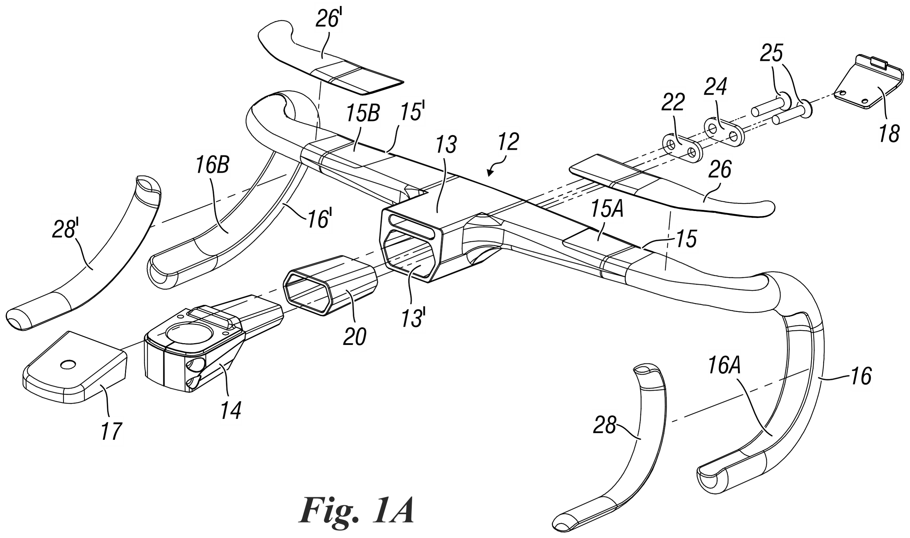

With reference to figures 1 and 1A, the vibration damping system of the invention is applied to a bicycle handlebar (12), which comprises a hollow central body or block (13) designed to house a handlebar support (14) for connecting the handlebar (12) to the bicycle's steering tube (not shown). A pair of opposing bars 15 (right bar) and 15' (left bar), extend from opposite lateral portions of said central block (13), and from their ends, opposite to those connected to the central block 13, two opposing and parallel curved sections 16 (right curved section) and 16' (left curved section)extend, which are commonly referred to as "drops." These define a gripping portion of the handlebar used by the cyclist when adopting a more aerodynamic and aggressive riding position. A first cover 17 (or front cover) closes and protects a front housing compartment 13' for the handlebar support, while a second cover 18 (or rear cover), positioned opposite the first, closes a rear compartment of the central block 13.

The vibration damping system of the invention in this application case comprises:
- a central pad 20 inserted in the front housing compartment 13' of the central block 13 and stabilized in position by means of the handlebar support 14, said central pad 20 being of hollow tubular shape and functional to isolate the handlebar from the vibrations that are transmitted from the frame to the handlebar itself through the handlebar support;
- a front pad 22 with a plate shape (damping plate), stabilized to the central block 13 on the opposite side with respect to the central pad 20 and stabilized in position by means of an anti-vibration sheet 24 fixed to the central block 13 by means of screws 25 or pins or other equivalent retaining means, said front pad being functional to cooperate with the central pad to isolate the handlebar from the vibrations that are transmitted from the frame to the handlebar itself through the handlebar support;

- a right upper damping pad 26 and a left upper damping pad 26' applied, respectively, to an upper surface of the right bar 15 and of the left bar 15' of the handlebar 12, said pads having a flat shape and a longitudinal extension substantially corresponding to the length of said right and left bars, said pads being configured to dampen vibrations transmitted to the hands and forearms of the cyclist resting on said handlebar portions.
- a right front damping pad 28 and a left front damping pad 28' applied, respectively, to the right curved portion 16 (or right drop) and to the left curved portion 16' (or left drop) of the handlebar 12, said pads have an arched shape to match the right and left drops and are designed to dampen the vibrations transmitted to the cyclist gripping these handlebar portions.

With reference to the configuration of figures 1 and 1A, the handlebar 12 can comprise dedicated housings for the described damping pads.

In particular, the handlebar may comprise a right upper seat 15A and a left upper seat 15B, both formed as recesses for housing the right upper damping pad 26 and the left upper damping pad 26' respectively; a right front seat 16A and a left front housing 16B, also formed as recesses for housing the right front damping pad 28 and the left front damping pad 28' respectively.

According to an alternative embodiment, the housings may be defined by raised-profile seats.

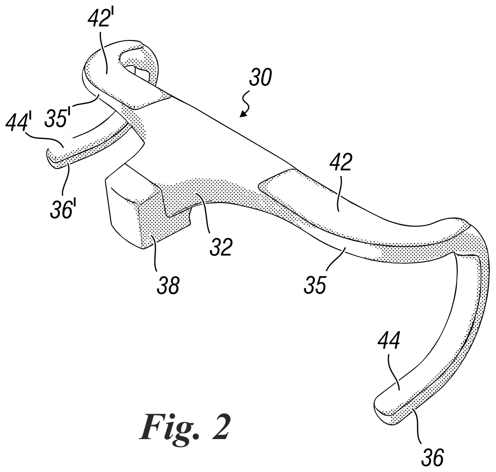

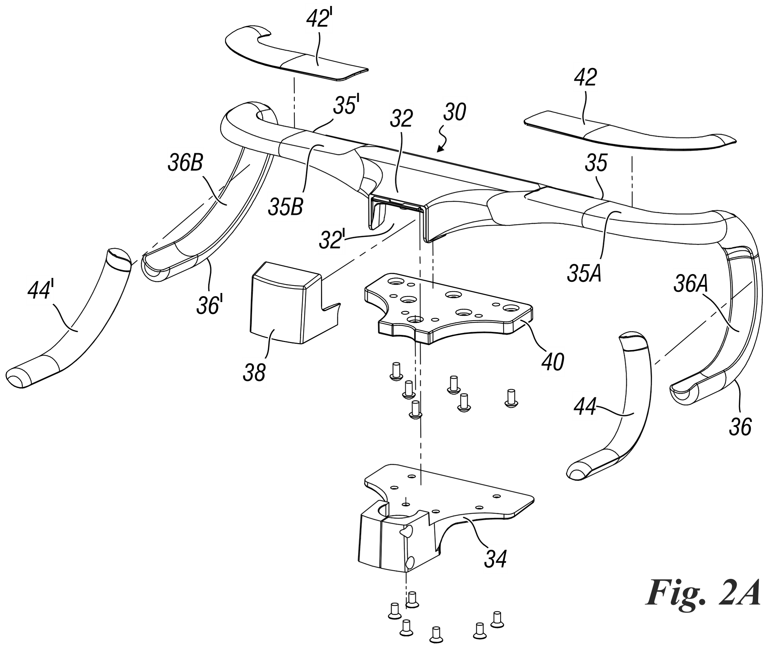

With reference to figures 2 and 2A, the vibration damping system of the invention is applied to a bicycle handlebar 30 according to an alternative embodiment in which the handlebar comprises a central body or block 32 featuring a lower housing 32' with an open bottom for accommodating a handlebar support 34, which connects the handlebar 30 to the bicycle's steering tube (not shown).

A pair of opposing bars 35 (right bar) and 35' (left bar) extend from opposite lateral portions of the central block 32. From their ends opposite the connection to the central block 32, two opposing and parallel curved portions 36 (right curved portion) and 36' (left curved portion) extend, commonly referred to as "drops" (they define a grip area on the handlebar used by cyclists for a more aerodynamic and aggressive riding position). A rear casing 38 is coupled to the central block 32.

The vibration damping system of the invention in this application case comprises:
- a central pad 40 inserted in the lower pocket 32' of the central block 32 and coupled to the handlebar support 34, said central pad having a plate-like shape and being functional to isolate the handlebar from the vibrations that are transmitted from the frame to the handlebar itself through the handlebar support;
- a right upper damping pad 42 and a left upper damping pad 42' applied, respectively, to an upper surface of the right bar 35 and of the left bar 35' of the handlebar 30, said pads having a flat shape and a longitudinal extension substantially corresponding to the length of said right and left bars, said pads being configured to dampen vibrations transmitted to the hands and forearms of the cyclist resting on said handlebar portions.
- a right front damping pad 44 and a left front damping pad 44' applied, respectively, to the right curved portion 36 (or right drop) and to the left curved portion 36' (or left drop) of the handlebar 30, said pads have an arched shape to match the right and left drops and are designed to dampen the vibrations transmitted to the cyclist gripping these handlebar portions.

As described above with reference to the configuration of figures 1 and 1A, the handlebar 30 may comprise dedicated housings for the described damping pads.

In particular, the handlebar may comprise a right upper seat 35A and a left upper seat 35B, both formed as recesses for housing the right upper damping pad 42 and the left upper damping pad 42' respectively; a right front seat 36A and a left front housing 36B, also formed as recesses for housing the right front damping pad 44 and the left front damping pad 44' respectively.

According to an alternative embodiment, the housings may be defined by raised-profile seats.

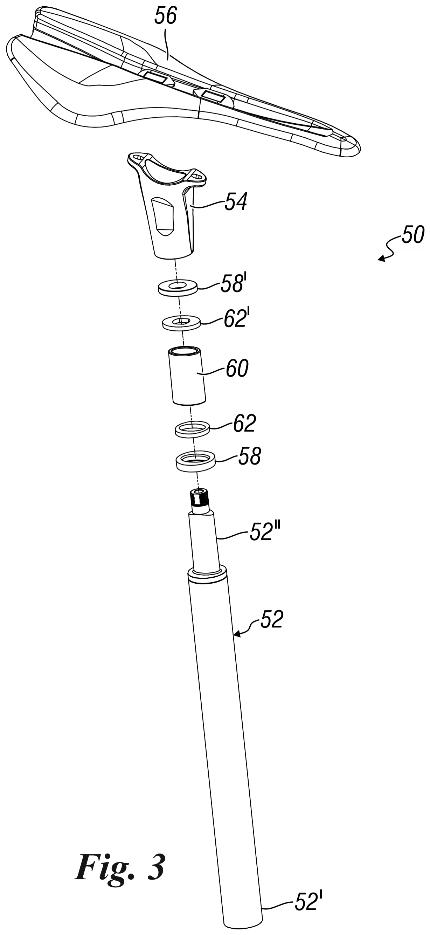

With reference to figure 3, the vibration damping system of the invention is shown applied to a seatpost assembly 50 of a bicycle that comprises a longitudinally developed seatpost tube 52 with an end portion 52' that fits into the frame column of the bicycle (not shown) and with the opposite end 52'' that connects with a seatpost head 54 that, in turn, connects to a saddle 56.

The vibration damping system of the invention in this application case comprises:
- a lower damping pad 58 shaped in a washer and fitted on the end 52"of the seatpost tube 52;
- an upper damping pad 58' also shaped like a washer and fitted on the end 52'' of the seatpost tube 52;
- an intermediate damping pad 60 in an intermediate position between said lower damping pad and upper damping pad, shaped as a hollow cylinder and also fitted on the end 52'' of the seatpost tube 52;
- a lower thrust washer 62 and an upper thrust washer 62' disposed, respectively, between the lower damping pad 58 and a lower end of the intermediate damping pad 60 and between the upper damping pad 58' and an upper end of the intermediate damping pad 60.

As can be seen from the foregoing, the advantages achieved by the vibration damping system for bicycles of the present invention are evident.

The vibration damping system of the bicycles of the invention advantageously allows to contain and reduce, if not to eliminate, the magnitude of the vibrations transmitted by the bicycle to the cyclist as well as to the bicycle itself; in particular, the damping system of the invention interrupts the flow of vibrations that are not transmitted from the bicycle frame to the handlebar or seatpost and from there to the cyclist himself (in particular, they are not transmitted to the joints, hands, wrists, elbows, shoulders, knees, etc.).

A further advantage of the vibration damping system of the present invention lies in the fact that, by reducing the vibrations transmitted to the cyclist, it helps to mitigate problems related to hand and foot sensitivity, which typically cause symptoms such as tingling and reduced sensory responsiveness, with a significant reduction in the level of concentration and, consequently, a dangerous fogging of the reflexes, that can compromise the full capacity of control and riding of the bicycle.

A further advantage of the vibration damping system of the invention lies in the fact that it does not require the execution of continuous corrective movements by the cyclist to compensate for the effects of vibrations and jolts and, therefore, there is no impairment in pedalling fluidity, no energy dispersion, and no increase in muscle fatigue. As a result, the damping system according to the invention ensures an overall improvement and optimization of the cyclist's performance, with positive effects both on pedalling efficiency and on the stability and control of the bicycle.

A further advantage of the damping system of the invention lies in the fact that, with particular reference to the damping pads applied to the handlebar, asymmetries in the shape and thickness of the pads are also possible (for example, arms always resting on the handlebar entail the need for upper damping pads with a soft base for the cyclist's forearms and front pads on the anti-vibration handles to better ride and better support the forced posture of the cyclist himself), with said pads being advantageously suitable for correcting any posture errors of the cyclist on the handlebar (by adjusting the thickness of said pads), thereby optimizing the alignment of the skeletal system on the bicycle and consequently contributing to potential postural rehabilitation of the cyclist following falls or other musculoskeletal problems. A further advantage lies in the fact that the system of the invention allows for smooth and natural riding, resulting in reduced muscular and nervous fatigue and enhancing overall ergonomics, all to the benefit of performance.

A further advantage of the damping system according to the invention is its lightness, which makes it particularly suitable for racing bicycles, where weight is a critical factor in ensuring high performance.

A further advantage lies in the fact that the damping pads are easy to manufacture, with a consequent economic advantage.

A further advantage lies in the fact that the vibration damping system of the invention is very robust, with the damping pads arranged in positions that do not involve risks of breakage, with a consequent guarantee of safety.

A further advantage of the damping system according to the invention is that it is cost-effective to manufacture.

A further advantage of the damping system of the invention is easily applicable and replaceable in the event of wear or damage even by non-expert users and without the need for the use of complex equipment for its installation. Although the invention has been described above with particular reference to one embodiment thereof, given solely by way of non-limiting example, numerous modifications and variations will be apparent to any technician skilled in the art, in light of the above description. The present invention is therefore intended to embrace all modifications and variations falling within the scope of the following claims.

## Claims

1. Vibration damping system for bicycles, and more specifically for handlebars and seatposts of bicycles such as road racing, triathlon, gravel bicycles, mountain bikes, electric bikes, city bikes and the like, **characterized in that** it comprises a plurality of separate and distinct damping pads, configured to locally interrupt the transmission of vibration flows from the frame to the handlebar and/or to the seatpost of a bicycle, without allowing relative movements between the frame and the handlebar and/or the seatpost, the pads being stabilized internally and/or externally to a handlebar and/or to a seatpost of a bicycle, at structurally rigid areas of a handlebar (12, 30) and/or of a seatpost assembly (50), where vibrations transmitted from the terrain to the wheels, the frame and the cyclist tend to concentrate.

2. Vibration damping system according to claim 1, **characterized in that** the damping pads are made of natural rubber, cork, polyurethane elastomers (PU), silicone, thermoplastic elastomers (PTE), microcellular elastomers and similar polymeric materials.

3. Vibration damping system according to claim 1 or 2, **characterized in that** the damping pads comprise thicknesses preferably comprised between 0.5mm and 8mm and even more preferably comprised between 1mm and 5mm and such as not to alter the structural geometry of the handlebar or the seatpost.

4. Vibration damping system according to claim 1 or 2, **characterized in that** the damping pads comprise a degree of hardness preferably comprised between 30 and 100 Shore A, selected according to the application position and the desired ergonomics.

5. Vibration damping system according to the preceding claims, **characterized in that** the damping pads are applied by means of adhesive or glue or with another suitable non-permanent and removable fixing method.

6. Vibration damping system according to the preceding claims, **characterized in that** the damping pads are formed in dedicated seats formed as recessed or raised profiles on the handlebar (12, 30).

7. Handlebar (12) of a bicycle, **characterized by** comprising the vibration damping system according to claims 1 to 6 comprising:
- a central pad (20) inserted into a front housing compartment (13') of a body or central block (13) of the handlebar and stabilized in position by means of a handlebar support (14) for the connection of the handlebar 12 to the steering tube of the bicycle, said central damping pad (20) having a hollow tubular shape and serving to isolate the handlebar from vibrations transmitted from the frame to the handlebar itself through the handlebar support.
- a front pad (22) with a plate shape (damping plate), stabilized to the central block (13) on the opposite side with respect to the central pad (20) and stabilized in position by means of an anti-vibration sheet (24) fixed to the central block (13) by means of screws (25) or pins or other equivalent retaining means, said front pad being functional to cooperate with the central pad to isolate the handlebar from the vibrations that are transmitted from the frame to the handlebar itself through the handlebar support;
- a right upper damping pad (26) and a left upper damping pad (26') applied, respectively, on an upper front of a right bar (15) and a left bar (15') that extend from opposite lateral portions of said central block (13) of the handlebar (12), said pads having a flat shape and longitudinal extension substantially corresponding to the length of said right and left bars, said pads being functional for damping the vibrations that are transmitted to the forearms of the cyclist resting on said handlebar portions;
- a right front damping pad (28) and a left front damping pad (28') applied, respectively, to a right curved portion (16) (or right drop) and to a left curved portion (16') (or left drop), which extend from ends opposite to those connected to the central block (13), said pads functionally cooperating to interrupt distinct vibration routes without allowing relative movement between the parts of the handlebar.

8. Handlebar (30) of a bicycle, **characterized by** comprising the vibration damping system according to claims 1 to 6 comprising:
- a central pad (40) inserted in a lower pocket (32') of the body or central block (32) of the handlebar (30) and coupled to a handlebar support (34) for connecting the handlebar to the steering tube of the bicycle, said central pad having a plate shape being functional to isolate the handlebar from the vibrations transmitted from the frame to the handlebar itself through the handlebar support;
- a right upper damping pad (42) and a left upper damping pad (42') applied, respectively, to an upper front surface of the right bar (35) and the left bar (35') of the handlebar (30), which extend from opposite lateral portions of said central block (32), said pads having a flat shape and a longitudinal extension substantially corresponding to the length of said right and left bars, said pads being functional for damping vibrations transmitted to the forearms of the cyclist resting on said handlebar portions.
- a right front damping pad (44) and a left front damping pad (44') applied respectively to a right curved portion (36) (or right drop) and a left curved portion (36') (or left drop), which extend from the ends of the right bar (35) and the left bar (35') of the handlebar (30) opposite to those connected to the central block (32), said pads having an arched shape for coupling with the right and left drops, said pads being functional for damping vibrations transmitted to the cyclist gripping said portions of the handlebar.

9. Seatpost assembly (50) of a bicycle, **characterized by** comprising the vibration damping system according to claims 1 to 6, comprising:
- a lower damping pad (58) shaped like a washer and fitted on one end (52'') of a seatpost tube (52) that is inserted with an end portion (52') in the column of the bicycle frame;
- an upper damping pad (58') also shaped like a washer and fitted on the end (52'') of the seatpost tube (52);
- an intermediate damping pad (60) in an intermediate position between said lower damping pad and upper damping pad and shaped like a hollow cylinder and also fitted on the end (52") of the seatpost tube (52);
- a lower thrust washer (62) and an upper thrust washer (62') are positioned, respectively, between the lower damping pad (58) and a lower end of the intermediate damping pad (60), and between the upper damping pad (62') and an upper end of the intermediate damping pad (60); said damping pads and thrust washers are positioned between the longitudinally extending seatpost tube (52) and a seatpost head (54) connected to a saddle (56), preventing axial or angular displacements of the seatpost tube with respect to the frame.
